# EUROPÄISCHE PATENTSCHRIFT

(11) **EP 2 860 322 B1**
(45) Veröffentlichungstag und Bekanntmachung des Hinweises auf die Patenterteilung: **26.07.2017**
(21) Anmeldenummer: 14003773.0
(22) Anmeldetag: 26.09.2013
(51) Int. Cl.: E04B 9/32, F21S 8/04, E04B 9/04, F21V 33/00, F21V 7/00, F21V 7/22, F21V 13/02, F21V 19/00, F21Y 115/10

(54) **Lichtdecke**
Luminous ceiling
Plafond lumineux

(30) Priorität: 16.10.2012 AT 4022012 U
(43) Veröffentlichungstag der Anmeldung: 15.04.2015
(62) Teilanmeldung aus: 13450044.6
(73) Patentinhaber: TREVISION Groß.Bild.Technik GmbH, 7051 Großhöflein (AT)
(72) Erfinder: Wikturna, Heinz, 7051 Großhöflein (AT)
(74) Vertreter: Beer & Partner Patentanwälte KG

(56) Entgegenhaltungen:
- AT-A1- 509 646
- DE-A1- 10 253 343
- DE-A1- 19 943 478
- DE-U1- 20 004 356
- FR-A1- 2 952 090
- US-A1- 2010 182 782

## Beschreibung

Die Erfindung betrifft eine Lichtdecke mit den Merkmalen des einleitenden Teils von Anspruch 1 (DE 199 43 478 A1).

Lichtdecken sind bekannt und umfassen als wesentliche Bestandteile einen Rahmen, in dem eine Frontfolie aus lichtdurchlässigem, beispielsweise durchscheinendem Werkstoff, der bedruckt sein kann, vorgesehen ist.

Auf der der Frontfolie gegenüberliegenden Seite des Rahmens ist eine blickdichte Folie angeordnet, die im Wesentlichen die Funktion einer Staubschutzfolie hat. In bestimmten Anwendungsfällen ist im Rahmen parallel zur blickdichten Folie, die der Frontfolie gegenüberliegt, eine Rückwand, z.B. aus Aluminium, vorgesehen, die dem Rahmen die erforderliche Stabilität gibt und gegebenenfalls auch die Montage des Rahmens in einem Raum erlaubt.

Die Frontfolie wird mit Leuchtmitteln beleuchtet, so dass der lichtabgebende Effekt der Lichtdecke erreicht wird.

In der DE 199 43 478 A1 ist ein Beleuchtungskörper beschrieben, der einen Rahmen aufweist, zwischen dem zwei "teilweise lichtdurchlässige" Folien gespannt sind. Die Folien sind mit Hilfe von Kedern in Nuten der Rahmenteile befestigt, wie dies beispielsweise Fig. 2 der DE 199 43 478 A1 zeigt. Bei dem Beleuchtungskörper der DE 199 43 478 A1 sind die Leuchtmittel außerhalb der beiden Folien angeordnet.

Die DE 102 53 343 A1 betrifft eine Spannwand oder -decke mit einem Rahmen und mit einer am Rand des Rahmens befestigten Folie. Zusätzlich können Leuchtmittel vorgesehen sein, die entweder oberhalb des Rahmens an einer Decke oder zwischen zwei Spannwänden vorgesehen sind. Die Befestigung der Folie erfolgt mit Hilfe von hakenförmigen Kedern, die über von Schenkeln des Rahmens nach außen abstehenden Stegen gehängt werden.

Problematisch bei den bekannten Lichtdecken ist es, dass die Frontfolie ungleichmäßig ausgeleuchtet wird und durch Teile des Rahmens Schatten auf die Frontfolie fallen, so dass auch dadurch die Frontfolie ungleichmäßig ausgeleuchtet wird.

Der Erfindung liegt die Aufgabe zugrunde, eine Lichtdecke der eingangs genannten Gattung zur Verfügung zu stellen, bei der ein möglichst einfaches Befestigen der Frontfolie und der blickdichten Folie gewährleistet ist.

Gelöst wird diese Aufgabe erfindungsgemäß mit einer Lichtdecke, welche die Merkmale von Anspruch 1 aufweist.

Bevorzugte und vorteilhafte Ausgestaltungen der erfindungsgemäßen Lichtdecke sind Gegenstand der Unteransprüche.

Wegen der Nuten, die, wie dies für Lichtdecken an sich bekannt ist, im Rahmen der Lichtdecke vorgesehenen sind, kann die Frontfolie und die der Frontfolie gegenüberliegende, blickdichte Folie durch Klemmen - in gespanntem Zustand - festgelegt werden.

Hierzu sind an den Rändern der Frontfolie und der blickdichten Folie, die der Frontfolie gegenüberliegend angeordnet ist, Keder, vorgesehen, die klemmend in Nuten im Rahmen eingeschoben werden.

Wenn bei der erfindungsgemäßen Lichtdecke die im Rahmen derselben vorgesehenen Nuten in einer bevorzugten Ausführungsform in Gebrauchslage der Lichtdecke nach unten offen sind, können die Frontfolie und die blickdichte Folie von unten her am Rahmen befestigt werden.

Weitere Einzelheiten und Merkmale der Erfindung ergeben sich aus der nachstehenden Beschreibung von bevorzugten Ausführungsbeispielen anhand der Zeichnungen.

Es zeigt
- Fig. 1: schematisch und im Schnitt eine Lichtdecke,
- Fig. 2: eine Ausführungsform eines Rahmenteils einer erfindungsgemäßen Lichtdecke,
- Fig. 3: eine abgeänderte Ausführungsform eines Rahmenteils,
- Fig. 4: eine weitere Ausführungsform eines Rahmenteils,
- Fig. 5: einen am Rahmen einer Lichtdecke anbringbaren Bauteil mit Blende und Reflexionsfläche,
- Fig. 6: den Bauteil aus Fig. 5 in Schrägansicht und
- Fig. 7: eine Einzelheit des Bauteils aus Fig. 5.

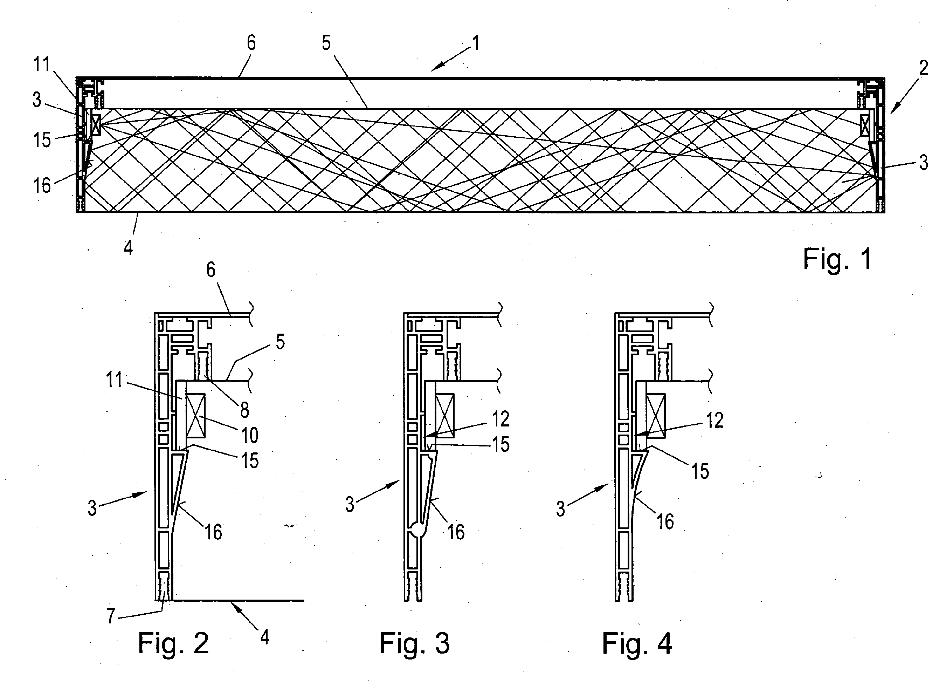

In der Ausführungsform von Figur 1 umfasst eine Lichtdecke 1 einen Rahmen 2, der aus mehreren, in der Regel vier, Rahmenteilen 3 (in Form von Profilleisten mit einer der beispielhaft in den Fig. 2 bis 4 gezeigten Querschnittsformen) zusammengesetzt ist.

In Figur 1 sind nur die zwei seitlichen Rahmenteile 3 des Rahmens 2 gezeigt, um die Übersichtlichkeit von Figur 1 zu gewährleisten.

Zwischen den Rahmenteilen 3 sind eine Frontfolie 4 und eine blickdichte Folie 5 gespannt. Die Frontfolie 4 und die blickdichte Folie 5 werden beispielsweise mit an ihren Rändern vorgesehenen Kedern, die in Nuten 7 bzw. 8 der Rahmenteile 3 (siehe Figur 2) klemmend eingesetzt werden, am Rahmen 2 festgelegt.

Hierzu können die Seitenwände der Nuten 7 und 8 mit Sägezahnprofil ausgestattet sein, um einen sicheren Sitz der Ränder (Keder) der Folien 4 und 5 zu gewährleisten.

An der der Frontfolie 4 gegenüberliegenden Seite des Rahmens 2 ist eine Rückwand 6 vorgesehen. Die Rückwand 6 besteht aus Metall, insbesondere Aluminium.

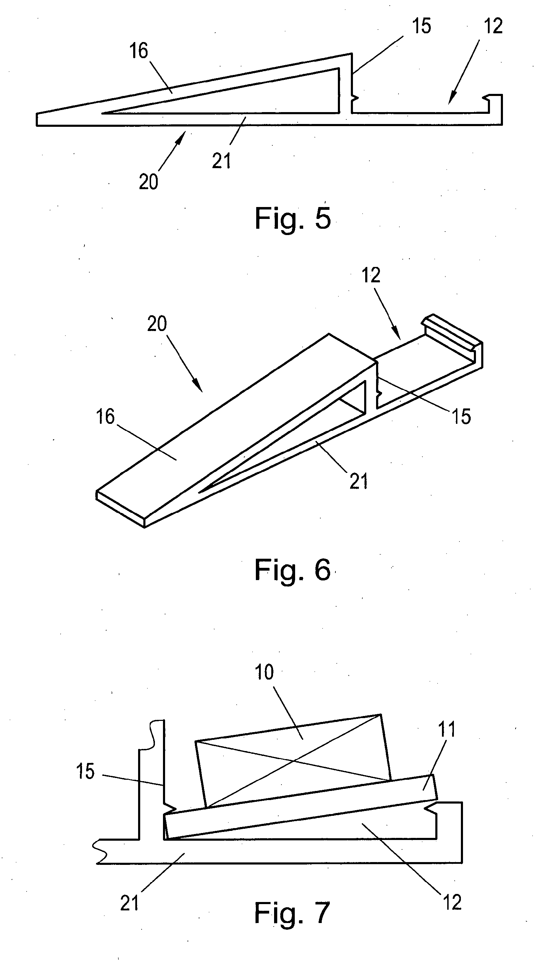

An der Innenseite des Rahmens 2 sind in hinterschnittene Nuten 12 Leuchtmittel 10, z.B. LEDs, über Träger 11 (Platinen) befestigt. Die Träger 11 der Leuchtmittel 10 können, wie dies in Figur 7 angedeutet ist, durch Einklipsen in den hinterschnittenen Nuten 12 der Rahmenteile 3 festgelegt werden.

Neben den Nuten 12 und neben den Leuchtmitteln 10 sind an der Innenseite der Rahmenteile 3 Blenden 15 vorgesehen, die im Wesentlichen senkrecht zur Ebene der Rahmenteile 3, also im Wesentlichen parallel zur Frontfolie 4, ausgerichtet sind. Von dem freien Ende der Blenden 15 erstrecken sich Reflexionsflächen 16 von den Nuten 12 und damit von den Leuchtmitteln 10 weg. Die Reflexionsflächen 16 sind zur Ebene der Rahmenteile 3 schräg ausgerichtet und schließen mit der Frontfolie 4 einen spitzen Winkel ein.

Die Reflexionsflächen 16 können, wie in Figuren 1 und 2 gezeigt, eben ausgebildet sein.

Es ist aber auch in Betracht gezogen, die Reflexionsflächen 16, so wie in Figur 4 gezeigt, konkav gewölbt auszubilden.

In Figur 3 ist eine Ausführungsform von Rahmenteilen 3 gezeigt, deren Reflexionsflächen 16 verstellbar sind, sodass deren Winkel zu der Ebene der Rahmenteile 3 und der Frontfolie 4 verändert und/oder deren Form (eben oder gebogen) durch Verformen geändert werden kann.

Durch die Blenden 15, insbesondere in Kombination mit den Reflexionsflächen 16, die an der Innenseite des Rahmens 2 der Lichtdecke 1 vorgesehen sind, wird, wie durch schematisch angedeutete Lichtstrahlen in Figur 1 angedeutet ist, verhindert, dass Licht von den Leuchtmitteln 10 ungleichmäßig auf die Frontfolie 4 trifft, so dass die Frontfolie 4 der erfindungsgemäßen Lichtdecke 1 gleichmäßig ausgeleuchtet wird, ohne dass auf die Frontfolie 4 Schatten fallen.

Die Blenden 15 und die Reflexionsflächen 16 müssen an den Rahmenteilen 3 nicht fix montiert sein, sondern können auch als gesonderte Bauteile 20 ausgebildet sein, wie dies in den Figuren 5 bis 7 in einem Ausführungsbeispiel gezeigt ist.

Die die Bauteile bildenden Profilleisten umfassen eine Grundplatte 21, an der die Blende 15 und die Reflexionsfläche 16 vorgesehen sind. Auch ist an der Grundplatte 21 der Profilleiste 20 die hinterschnittene Nut 12 vorgesehen, in welche die Träger 11 der Leuchtmittel 10 eingerastet werden können (Figur 7).

Im gezeigten Ausführungsbeispiel ist die blickdichte Folie 5 reflektierend ausgebildet, so dass durch die von Reflexionsflächen 16 unterstützte Mehrfachreflexion die gleichmäßige Ausleuchtung der Frontfolie 4, die durchscheinend ausgebildet ist und die gegebenenfalls bedruckt sein kann, verbessert ist.

## Patentansprüche

1. Lichtdecke (1) mit einem Rahmen (2), in dem eine durchscheinende Frontfolie (4), eine Folie (5) und eine Rückwand (6) vorgesehen sind, wobei Leuchtmittel (10) vorgesehen sind, wobei die Frontfolie (4) und die Folie (5) am Rahmen (2) der Lichtdecke (1) mit an ihren Rändern vorgesehenen Kedern, die in Nuten (7,8), die in Teilen (3) des Rahmens (2) der Lichtdecke (1) vorgesehen sind, klemmend eingesetzt sind, festgelegt sind, und wobei die Nut (7) für das Festlegen der Frontfolie (4) in Gebrauchslage der Lichtdecke (1) unterhalb der Leuchtmittel (10) vorgesehen ist, **dadurch gekennzeichnet, dass** die Folie (5) eine blickdichte Folie (5) ist, die zwischen der Frontfolie (4) und der Rückwand (6) angeordnet ist, dass die Leuchtmittel (10) zwischen der Frontfolie (4) und der blickdichten Folie (5) vorgesehen sind, und dass die Nut (8) für das Festlegen der blickdichten Folie (5) in Gebrauchslage der Lichtdecke (1) oberhalb der Leuchtmittel (10) vorgesehen ist.

2. Decke nach Anspruch 1, **dadurch gekennzeichnet, dass** die Nuten (7,8) in Gebrauchslage der Lichtdecke (1) nach unten hin offen sind.

3. Decke nach Anspruch 1 oder 2, **dadurch gekennzeichnet, dass** die Frontfolie (4) und die blickdichte Folie (5) zwischen den Teilen (3) des Rahmens (2) der Lichtdecke (1) gespannt sind.

4. Decke nach einem der Ansprüche 1 bis 3, **dadurch gekennzeichnet, dass** die Seitenwände der Nuten (7,8) mit Sägezahnprofil ausgestattet sind.

5. Decke nach einem der Ansprüche 1 bis 4, **dadurch gekennzeichnet, dass** die Nut (7) für das Festlegen der Frontfolie (4) an dem in Gebrauchslage unteren Rand der Teile (3) des Rahmens (2) der Lichtdecke (1) vorgesehen ist.

## Claims

1. Illuminated ceiling (1) having a frame (2), in which a translucent front film (4), a film (5) and a rear wall (6) are provided, lighting means (10) being provided, the front film (4) and the film (5) being fixed on the frame (2) of the illuminated ceiling (1) by way of beading provided on the edges thereof, which are inserted in a clamping manner in grooves (7, 8), which are provided in parts (3) of the frame (2) of the illuminated ceiling (1), and the groove (7) for the fixing of the front film (4) being provided below the lighting means (10) in the operating position of the illuminated ceiling (1), **characterized in that** the film (5) is an opaque film (5), which is arranged between the front film (4) and the rear wall (6), **in that** the lighting means (10) are provided between the front film (4) and the opaque film (5), and **in that** the groove (8) is provided for the fixing of the opaque film (5) is provided above the lighting means (10) in the operating position of the illuminated ceiling (1).

2. Ceiling according to Claim 1, **characterized in that** the grooves (7, 8) are open at the bottom in the operating position of the illuminated ceiling (1).

3. Ceiling according to Claim 1 or 2, **characterized in that** the front film (4) and the opaque film (5) are tensioned between the parts (3) of the frame (2) of the illuminated ceiling (1).

4. Ceiling according to one of Claims 1 to 3, **characterized in that** the side walls of the grooves (7, 8) are equipped with a sawtooth profile.

5. Ceiling according to one of Claims 1 to 4, **characterized in that** the groove (7) is provided for the fixing of the front film (4) on the lower edge of the parts (3) of the frame (2) of the illuminated ceiling (1) in the operating position.

## Revendications

1. Plafond lumineux (1) avec un cadre (2), dans lequel une feuille avant transparente (4), une feuille (5) et une paroi arrière (6) sont prévues, des moyens lumineux (10) étant prévus, la feuille avant (4) et la feuille (5) étant fixées sur le cadre (2) du plafond lumineux (1) avec les bourrelets prévus sur leurs bords, qui sont insérés bloquant dans les rainures (7,8) qui sont prévues dans les parties (3) du cadre (2) du plafond lumineux (1) et la rainure (7) étant prévue pour la fixation de la feuille avant (4) en dessous des moyens lumineux (10) en situation d'utilisation du plafond lumineux (1), **caractérisé en ce que** la feuille (5) est une feuille opaque (5), qui est disposée entre la feuille avant (4) et la paroi arrière (6), **en ce que** des moyens lumineux (10) sont prévus entre la feuille avant (4) et la feuille opaque (5) et **en ce que** la rainure (8) est prévue au-dessus des moyens lumineux (10) pour la fixation de la feuille opaque (5) en situation d'utilisation du plafond lumineux (1).

2. Plafond selon la revendication 1, **caractérisé en ce que** les rainures (7,8) sont ouvertes vers le bas en situation d'utilisation du plafond lumineux (1).

3. Plafond selon la revendication 1 ou 2, **caractérisé en ce que** la feuille avant (4) et la feuille opaque (5) sont tendues entre les parties (3) du cadre (2) du plafond lumineux (1).

4. Plafond selon l'une quelconque des revendications 1 à 3, **caractérisé en ce que** les parois latérales des rainures (7,8) sont dotées de profilé en dents de scie.

5. Plafond selon l'une quelconque des revendications 1 à 4, **caractérisé en ce que** la rainure (7) est prévue en situation d'utilisation pour la fixation de la feuille avant (4) sur le bord inférieur des parties (3) du cadre (2) du plafond lumineux (1).
